# EUROPÄISCHE PATENTSCHRIFT

(11) **EP 2 700 149 B1**
(45) Veröffentlichungstag und Bekanntmachung des Hinweises auf die Patenterteilung: **03.06.2020**
(21) Anmeldenummer: 12713594.5
(22) Anmeldetag: 28.03.2012
(51) Int. Cl.: H02K 7/02, H02K 7/116, H02K 16/00, F16H 37/06

(54) **ANTRIEB**
DRIVE
DISPOSITIF D'ENTRAÎNEMENT

(30) Priorität: 18.04.2011 DE 102011017458
(43) Veröffentlichungstag der Anmeldung: 26.02.2014
(73) Patentinhaber: SEW-EURODRIVE GmbH & Co. KG, 76646 Bruchsal (DE)
(72) Erfinder: BARTON, Peter, 75015 Bretten (DE); DIETRICH, Stefan, 76149 Karlsruhe (DE); DITTES, Gerhard, 75053 Gondelsheim (DE); DOPPELBAUER, Martin, 75015 Bretten (DE); HAUCK, Matthias, 68723 Schwetzingen (DE); HAUG, Michael, 75015 Bretten (DE); KOKER, Torsten, 76297 Stutensee (DE); METZLER, Friedhelm, 76669 Bad Schönborn (DE); SCHMIDT, Josef, 76676 Graben-Neudorf (DE); SCHÜTTERLE, Ingo, 72488 Sigmaringen (DE)
(86) Internationale Anmeldenummer: PCT/EP2012/001349
(87) Internationale Veröffentlichungsnummer: WO 2012/143083

(56) Entgegenhaltungen:
- EP-A1- 1 744 082
- EP-A1- 2 196 307
- EP-A2- 1 414 134
- DE-A1- 4 402 337

## Beschreibung

Die Erfindung betrifft einen Antrieb.

Es ist bekannt, einen Elektromotor generatorisch oder motorisch zu betreiben. Dabei ist die elektrische Anschlussleistung und die Baugröße des Elektromotors derart ausgelegt, dass das von der anzutreibenden Last benötigte Spitzen-Drehmoment beziehungsweise die Spitzenleistung erzeugbar ist.

Aus der EP 2 196 307 A1 ist eine Presse bekannt.

Aus der DE 44 02 337 A1 ist ein elektromotorischer Antrieb bekannt.

Aus der EP 1 744 082 A1 ist ein Schneckengetriebemotor bekannt.

Aus der EP 1744082 A1 ist eine Verbindung zwischen einem Elektromotor und einem Getriebe bekannt, bei der ein Lagergehäuse in eine Getriebeöffnung eingeführt ist.

Der Erfindung liegt daher die Aufgabe zugrunde, einen Antrieb weiterzubilden, wobei eine geringere Anschlussleistung vorsehbar sein soll.

Erfindungsgemäß wird die Aufgabe bei dem Antrieb nach den in Anspruch 1 angegebenen Merkmalen gelöst.

Wichtige Merkmale der Erfindung bei dem Antrieb sind, dass einem Summierungsgetriebe Leistung von Elektromotoren zugeführt wird,
wobei mit einer abtreibenden Welle des Summierungsgetriebes eine abtreibende Welle des Antriebs oder eine eintreibende Welle eines Getriebes angetrieben wird, das eine abtreibende Welle aufweist,
wobei die abtreibende Welle mit einer Welle einer anzutreibenden Last verbunden ist,
wobei einem Energiespeicher Leistung vom Summierungsgetriebe zuführbar ist oder Leistung vom Energiespeicher ans Summierungsgetriebe abführbar.

Von Vorteil ist dabei, dass eine geringere Netzanschlussleistung notwendig ist und somit geringere Kosten auftreten. Außerdem ist der Wirkungsgrad insgesamt verbessert.

Weitere wichtige Merkmale einer Ausführungsform sind, dass der Antrieb ein Summierungsgetriebe aufweist, das ein zentrales Verzahnteil, insbesondere Sonnenrad, aufweist, mit welchem weitere Verzahnteile, insbesondere Ritzel, im Eingriff stehen, wobei ein erstes weiteres Verzahnteil von einem Elektromotor angetrieben ist, insbesondere mit der Rotorwelle eines Elektromotors drehfest verbunden ist,
wobei ein zweites weiteres Verzahnteil
- mit einer Welle eines Schwungradspeichers oder
- mit einer Welle einer Elektromaschine, die bei generatorischem Betrieb über eine elektrische Wandlereinheit Energie in einen Energiespeicher einspeist oder bei motorischem Betrieb aus dem Energiespeicher gespeist wird, drehfest verbunden ist.

Von Vorteil ist dabei, dass eine geringere Netzanschlussleistung notwendig ist und somit geringere Kosten auftreten. Außerdem ist der Wirkungsgrad insgesamt verbessert.

Bei einer vorteilhaften Ausgestaltung weist der Energiespeicher einen Akkumulator, eine Batterie und/oder einen Kondensator, insbesondere Doppelschichtkondensator und/oder Ultracap-Kondensator, auf. Von Vorteil ist dabei, dass eine schnelle Abspeicherung und nachfolgende Entnahme ermöglicht ist.

Bei einer vorteilhaften Ausgestaltung ist die elektrische Wandlereinheit ein rückspeisefähiger Umrichter oder ein Matrixumrichter. Von Vorteil ist dabei, dass ein bidirektionaler Leistungsfluss ermöglicht ist.

Bei einer vorteilhaften Ausgestaltung sind die weiteren Verzahnteile einstückig an der jeweiligen Welle ausgebildet, insbesondere also an der Welle des Schwungradspeichers, an der Welle des Elektromotors und/oder an der Welle der Elektromaschine. Von Vorteil ist dabei, dass eine spielfreie Verbindung und kostengünstige Herstellung ermöglicht ist.

Bei einer vorteilhaften Ausgestaltung ist die Elektromaschine ein Elektromotor, insbesondere ein zu den anderen Elektromotoren baugleich ausgeführter Elektromotor. Von Vorteil ist dabei, dass als Elektromaschine ein selber Motor verwendbar ist wie als antreibender Elektromotor verwendet wird. Somit ist auch der den jeweiligen Elektromotor speisende Umrichter jeweils gleichartig, insbesondere baugleich verwendbar. Der Energiespeicher ist dabei im Zwischenkreis des Umrichters anordenbar, so dass der elektrische Leistungsfluss aus dem Energiespeicher oder in den Energiespeicher mittels der Endstufe des Umrichters steuerbar ist.

Bei einer vorteilhaften Ausgestaltung sind die Elektromotoren mittels eines Kühlmediums entwärmbar, insbesondere hierzu die Elektromotoren Kühlkanäle aufweisen, die in einem für das Summierungsgetriebe gehäusebildenden Gehäuseteil, insbesondere Adapterflansch, zusammengeführt werden und in einen gemeinsamen Anschluss, insbesondere Auslassvorrichtung, münden. Von Vorteil ist dabei, dass ein hoher Wirkungsgrad erreichbar ist und außerdem bei geringem Bauvolumen des Antriebs eine hohe Leitung, also eine hohe Leistungsdichte.

Bei einer vorteilhaften Ausgestaltung ist auf der Welle des Schwungradspeichers eine als Schwungrad ausgebildete Masse angeordnet. Von Vorteil ist dabei, dass ein einfach und kostengünstig herstellbarer Energiespeicher herstellbar ist und Energie direkt und ohne weitere Wandlung zwischen dem Summierungsgetriebe und dem Energiespeicher austauschbar ist.

Bei einer vorteilhaften Ausgestaltung weist die Wandlereinheit eine Steuerung auf, welche den Energiefluss zwischen Summierungsgetriebe und Energiespeicher steuert. Von Vorteil ist dabei, dass eine Berücksichtigung weiterer Größen ermöglicht ist, insbesondere auch Sensorsignale eines mit der Last verbundenen Sensors, so dass direkt an der Last ein vorzugebender Sollwert erfassbar ist oder ein mit dem Sollwert direkt verbundener Wert.

Bei einer vorteilhaften Ausgestaltung ist das zentrale Verzahnteil auf einer abtreibenden Welle des Summierungsgetriebes angeordnet, welche als eintreibende Welle eines weiteren Getriebes, welches eine abtreibende Welle aufweist, des Antriebs fungiert oder welche als abtreibende Welle des Antriebs fungiert. Von Vorteil ist dabei, dass ein besonders einfaches Summierungsgetriebe herstellbar ist, indem auf der abtreibenden Welle des Summierungsgetriebes ein zentrales Sonnenrad angeordnet wird, mit welchem die von den Elektromotoren angetriebenen Ritzel im Eingriff stehen beziehungsweise ein mit der Welle des Energiespeichers verbundenes Ritzel.

Erfindungsgemäß ist die abtreibende Welle mit einer Last verbunden. Von Vorteil ist dabei, dass eine Last antreibbar ist, welche eine während des Antreibens veränderliche Drehmomentaufnahme beziehungsweise Leistungsaufnahme aufweist.

Erfindungsgemäß weist das Summierungsgetriebe ein Gehäuseteil mit Zentriermittel, insbesondere als Zentrierflansch fungierender Adapterflansch, auf, mit welchem Gehäuseteile der Elektromotoren verbunden sind. Von Vorteil ist dabei, dass die Elektromotoren zentrierbar sind am Adapterflansch, welcher auch gehäusebildend ist für das Summierungsgetriebe.

Erfindungsgemäß sind zwischen Zentriermittel und Gehäuse des Getriebes Beabstandungsmittel, wie Abstandshalter, angeordnet,
wobei die abtreibende Welle des Summierungsgetriebes in einem Lagertopf gelagert ist, der an einem Zentrierbund des Zentriermittels mit diesem verbunden ist, und welcher in eine Aufnahmebohrung des Gehäuses des Getriebes eingeführt ist,
wobei die Beabstandungsmittel im axialen Bereich zwischen der Aufnahmebohrung und dem Adapterflansch, insbesondere dem Zentrierbund des Adapterflansches, angeordnet sind, insbesondere auf größerem Radialabstand als der Lagertopf. Von Vorteil ist dabei, dass durch die Beabstandung eine thermische Trennung erreicht ist, also ein erhöhter Wärmeübergangswiderstand zwischen Summierungsgetriebe und von diesem angetriebenen Getriebe, wobei auf kleinerem Radialabstand der Lagertopf angeordnet ist und somit eine Zentrierung des Summierungsgetriebes zum von diesem angetriebenen Getriebe erreicht ist. Außerdem sind durch die auf größerem Radialabstand angeordneten Abstandshalter Schwingungen abgedämpft, so dass insgesamt die Geräuschemission verringerbar ist. Denn das Abstrahlen des von den Elektromotoren erzeugten Schalls erfolgt auch über die Oberfläche des Getriebes.

Wichtige Merkmale bei dem Verfahren zum Betreiben eines Antriebs sind, dass eine Last über ein Summierungsgetriebe angetrieben wird, welchem von einem Elektromotor Energie zugeführt wird und welches eine weitere Welle, insbesondere weitere Welle mit weiterem Verzahnteil, aufweist, wobei über die weitere Welle Leistung an einen Energiespeicher zugeführt oder von einem Energiespeicher abgeführt wird,
wobei das Zuführen abwechselnd zum Abführen erfolgt, insbesondere zyklisch. Von Vorteil ist dabei, dass innerhalb eines Zyklus, in welchem die Last ein veränderliches Drehmoment aufnimmt, zeitabschnittsweise Drehmoment vom Energiespeicher aufgenommen wird und in einem anderen Zeitabschnitt abgegeben wird. Somit ist ein von den antreibenden Elektromotoren maximal erzeugbares Drehmoment vorsehbar, welches geringer ist als das während eines Zyklus von der Last benötigte Spitzen-Drehmoment. Denn die notwendige Drehmomentdifferenz zum Spitzen-Drehmoment wird vom Energiespeicher entnommen.

Bei einer vorteilhaften Ausgestaltung wird die mechanische Leistung in elektrische, dem Energiespeicher zuführbare beziehungsweise vom Enegiespeicher abführbare Leistung gewandelt beziehungsweise umgekehrt. Von Vorteil ist dabei, dass eine schnelle Wandlung ermöglicht ist in eine Energieform, welche kostengünstig und langzeitstabil abspeicherbar und steuerbar ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:
In der Figur 1 sind Drehmomentverläufe gezeigt.
In der Figur 2 sind ebenfalls Drehmomentverläufe gezeigt.
In der Figur 3 ist eine Schrägansicht auf den Antrieb gezeigt, wobei eine Schnittlinie 1 gekennzeichnet ist.
In der Figur 4 ist ein Schnitt entlang der Schnittlinie 1 gezeigt.
In der Figur 5 ist eine Schrägansicht auf einen alternativen Antrieb gezeigt, bei dem einer der antreibenden Motoren generatorisch betrieben wird, so dass von diesem erzeugte Energie in einen elektrischen und/oder elektrochemischen Energiespeicher 503 zuführbar ist.

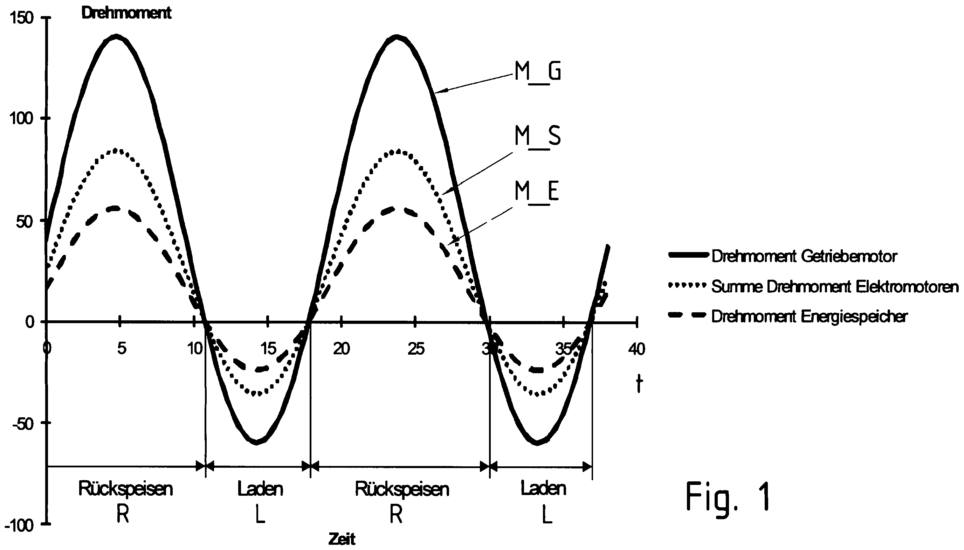

Wie in Figur 1 gezeigt, wird bei einem erfindungsgemäßen Antrieb zeitweise Energie einem Energiespeicher zugeführt. Dabei sind die zeitlichen Verläufe von Drehmomenten M entlang der Zeitachse t aufgetragen. Die Summe des von Elektromotoren des Antriebs erzeugten Drehmoments M_S wird zwar erzeugt, jedoch benötigt die anzutreibende Last bei jeder Umdrehung oder in jedem Arbeitszyklus nur in einem Zeitabschnitt R den vollen Betrag des erzeugten Drehmoments. In einem Zeitabschnitt L wird mehr Drehmoment M_G erzeugt als von der angetriebenen Last verbraucht wird. Daher wird dieses überschüssige Drehmoment M_E und somit auch die zugehörige Energie einem Energiespeicher zugeführt.

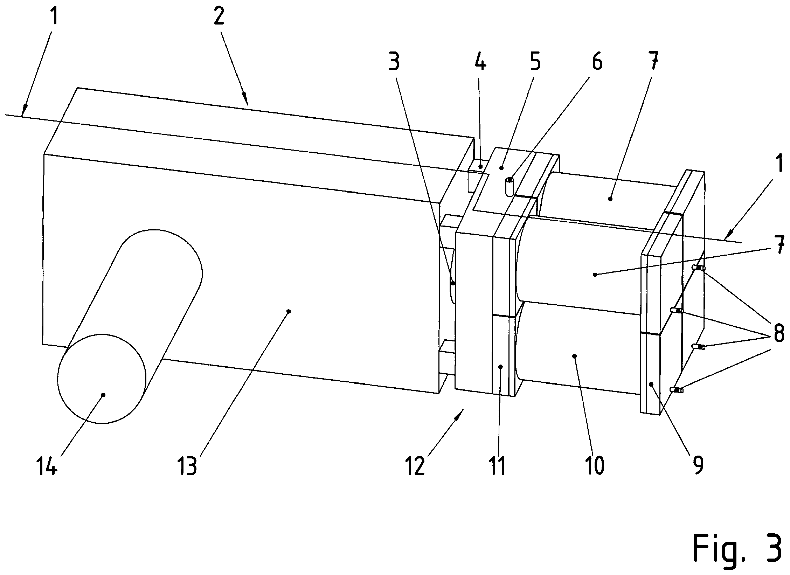

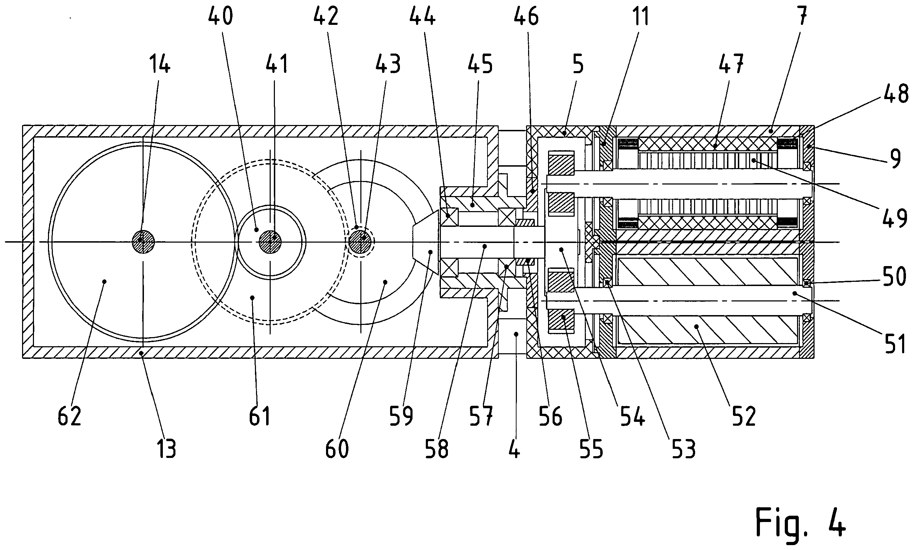

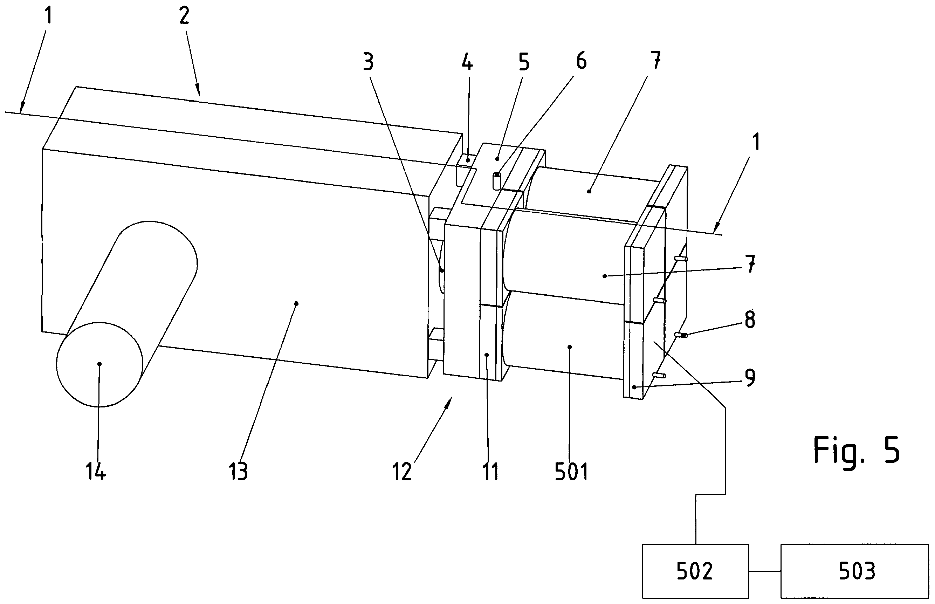

Hierzu ist der Energiespeicher in einer ersten Ausführungsart gemäß den Figuren 3 und 4 als Schwungradspeicher ausgeführt und in einer zweiten Ausführungsart gemäß Figur 5 als elektrisch aufladbarer Energiespeicher, wie Akkumulator und/oder Kondensator.

Als vom erfindungsgemäßen Antrieb angetriebene Last ist beispielsweise eine Ölförderpumpe vorgesehen.

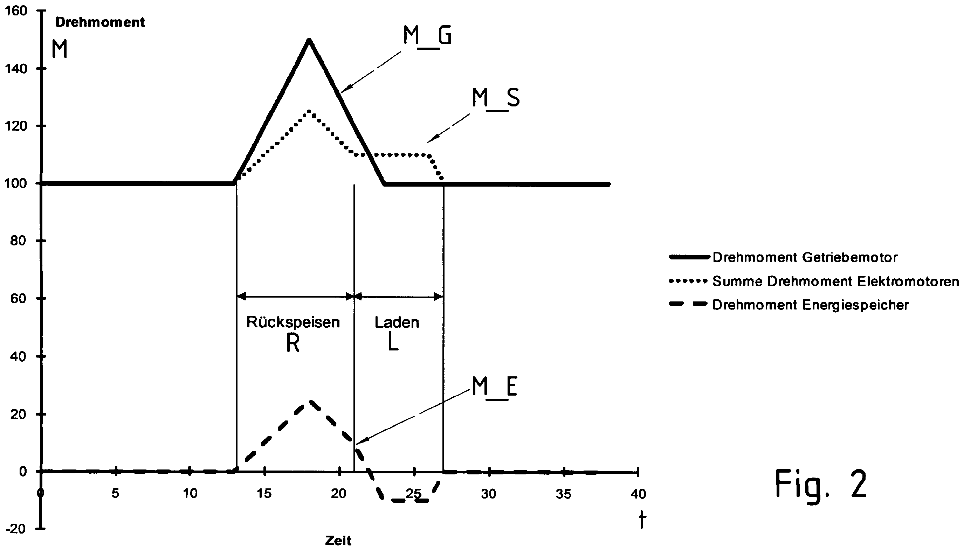

Als alternatives Beispiel für eine angetriebene Last ist beispielsweise ein Brecherantrieb oder dergleichen vorgesehen. Bei solchen angetriebenen Lasten treten stoßartige Belastungen auf, so dass die in Figur 2 gezeigten Drehmomentverläufe M auftreten.

Dabei wird wiederum überschüssig erzeugtes Drehmoment zeitweise, insbesondere während des Zeitabschnitts "Laden L" an den Energiespeicher abgeführt, so dass dieser aufgeladen wird, und in einem Zeitabschnitt "Rückspeisen R", in welche das an die Last abzugebende Drehmoment M_G des Getriebemotors die Summe der Drehmomente M_S der elektromotorischen Antriebe übersteigt, Energie und Drehmoment vom Energiespeicher rückgespeist.

Wie in Figur 3 und 4 gezeigt, weist der Antrieb hierzu mehrere elektromotorische Antriebe, also Elektromotoren 7 auf, deren Rotorwelle jeweils ein Ritzel aufweisen, wobei die Ritzelverzahnungen der Ritzel mit der Verzahnung eines Sonnenrads 54 im Eingriff stehen. Somit ist ein Summierungsgetriebe gebildet, welches die über die Ritzel eingebrachten Drehmomente aufsummierbar macht.

Das Sonnenrad 54 ist auf einer Welle 58 angeordnet, dass auch das Ritzel 59 trägt, welches das eintriebsseitige Verzahnungsteil eines Getriebes 2 ist. Die erste Getriebestufe dieses Getriebes 2 ist aus den miteinander im Eingriff stehenden Verzahnungsteilen (59, 60) gebildet, die zweite Getriebestufe aus den miteinander im Eingriff stehenden Verzahnungsteilen (42, 61), die dritte Getriebestufe aus den miteinander im Eingriff stehenden Verzahnungsteilen (42, 62), wobei die abtreibende Welle 14 das abtreibende Zahnrad 62 des Getriebes trägt.

Das Summierungsgetriebe 12 ist zumindest teilweise von einem Adapterflansch 5 gehäusebildend umgeben, welcher mittels Abstandshaltern 4 vom Gehäuse des Getriebes beabstandet und somit wärmetechnisch abgetrennt ist. Mittels der Abstandshalter 4 ist also ein hoher Wärmeübergangswiderstand zwischen Getriebe 2 und Summierungsgetriebe erreicht.

Die Welle 58 ist im Lagertopf 3 gelagert, welcher mit dem Gehäuse 13 des Getriebes 2 verbunden ist.

Die elektromotorischen Antriebe sind flüssigkeitsgekühlt, beispielsweise wassergekühlt, ausgeführt. Jeder Motor weist hierzu an seinem B-seitigen Lagerschild 9 einen Einlass 8 für das Kühlmedium auf. An der axial anderen Seite werden die Auslasse zusammengeführt im Adapterflansch 5, das hierzu entsprechende ineinander mündende Kanäle aufweist, die zum gemeinsamen Auslass 6 zusammengeführt werden.

Am Sonnenrad 54 ist auch ein weiteres Ritzel 55 im Eingriff, das mit der Welle 51 des Schwungrads verbunden ist, so dass Drehmoment über das Summierungsgetriebe ans Schwungrad oder alternativ von dort ans Summierungsgetriebe 12.

Dabei ist das Schwungrad und seine Welle 51 in einem Gehäuse vorgesehen, das identisch oder zumindest ähnlich ist zu den Gehäusen der Elektromotoren 7. Eine Wasserkühlung ist bei dem Schwungrad allerdings verzichtbar.

Statt des Schwungradspeichers ist auch ein andersartig aufgebauter mechanischer Energiespeicher 10 vorsehbar.

Die Welle 58 ist über die Lager 44 und 57 im Lagertopf 45 gelagert. Die axiale Festlegung erfolgt über eine Wellenmutter 56.

Im Gehäuse jedes Elektromotors 7 ist eine Statorwicklung 47 angeordnet, deren Wickelkopf 48, also Umlenkbereich der Statorwicklungsleitungen, das Aktivteil des Rotors 49, insbesondere also einen entsprechenden Kurzschlusskäfig und/oder Dauermagneten, axial überragt.

Der Adapterflansch 5 ist mit einem Zentrierflanschteil 46 verbunden, so dass beim Verbinden mit dem der Lagertopf 45 eine zentrierte Verbindung herstellbar ist.

Somit ist beim Antrieben einer Last, die zeitweise weniger Drehmoment aufnimmt als die Elektromotoren erzeugen Drehmoment und somit Leistungsfluss in den Energiespeicher 10 einleitbar und bei erhöhtem Drehmomentbedarf herausleitbar zur Last hin. Auf diese Weise ist bei zeitlich variierendem Drehmoment- oder Leistungs-Bedarf der Last eine möglichst konstante Drehmomenterzeugung ermöglicht.

Wie in Figur 5 gezeigt, sind auch andere Energiespeicher verwendbar. Beispielsweise ist anstatt des Schwungrad-Energiespeichers 10 ein Generator 501, insbesondere ein generatorisch arbeitender Elektromotor, anordenbar, so dass bei Leistungsfluss zu diesem Generator 501 hin elektrische Energie einem Energiespeicher 503 zuführbar ist.
Der Energiespeicher 503 ist vorzugsweise als Kondensator, wie Ultracap-Kondensator, und/oder Akkumulator, insbesondere Hochvoltbatterie, ausführbar. Eine Steuerung 502 steuert den zugehörigen Energiefluss. Hierzu weist sie eine AC/DC-Wandler auf, der die vom Generator erzeugte Wechselspannung gleichrichtbar macht und bei umgekehrtem Energiefluss den dann motorisch arbeitenden Generator 501 aus dem Energiespeicher mit Wechselspannung versorgt, also eine DC/AC-Wandlung ausführbar macht.

Wie auch die Elektromotoren 7 ist der Generator 501 mit einem Kühlmedium kühlbar.

Besonders bevorzugt wird umfasst also die Steuerung 502 einen rückspeisefähigen Umrichter oder einen Matrixumrichter, so dass ein bidirektionaler Energiefluss ausführbar ist.

Bei weiteren erfindungsgemäßen Ausführungsbeispielen ist an der abtreibenden Welle 14 oder im Bereich der angetriebenen Last ein Sensor zur Erfassung des Drehmoments angeordnet, so dass die Steuerung 502 das Drehmoment auf den vorgesehenen Drehmomentverlauf hin regeln kann.

### Bezugszeichenliste

- 1: Schnittlinie
- 2: Getriebe
- 3: Lagertopf
- 4: Abstandshalter
- 5: Adapterflansch
- 6: Auslass für Kühlmediums
- 7: Elektromotor
- 8: Einlass Kühlmedium
- 9: B-seitiges Lagerschild
- 10: Energiespeicher, insbesondere Schwungradspeicher
- 11: A-seitiges Lagerschild
- 12: Summierungsgetriebestufe
- 13: Gehäuseteil
- 14: Abtriebswelle
- 40: Ritzel
- 41: Welle
- 42: Ritzel
- 43: Welle
- 44: Lager
- 45: Lagertopf
- 46: Zentrierflanschteil
- 47: Statorwicklung
- 48: Wickelkopf
- 49: Rotor mit Aktivteil, insbesondere Kurzschlusskäfig und/oder Dauermagneten
- 50: Lager
- 51: Welle
- 52: Schwungmasse
- 53: Lager
- 54: Sonnenrad
- 55: Ritzel
- 56: Wellenmutter
- 57: Lager
- 58: Welle
- 59: Ritzel
- 60: Zahnrad
- 61: Zahnrad
- 501: Generator, insbesondere generatorisch arbeitender Elektromotor
- 502: Steuerung
- 503: Energiespeicher, insbesondere Kondensator, wie Ultracap-Kondensator, und/oder Akkumulator

- M: Drehmoment
- M_G: Drehmoment des Getriebemotors
- M_S: Summe der Drehmomente der elektromotorischen Antriebe
- M_E: Drehmoment des Energiespeichers.
- R: Rückspeisen
- L: Laden
- t: Zeit

## Patentansprüche

1. Antrieb zum Antreiben einer Last, wobei der Antrieb ein Getriebe (2), ein Summierungsgetriebe (12) und Elektromotoren (7) aufweist,
wobei dem Summierungsgetriebe (12) Leistung von den Elektromotoren (7) zugeführt wird,
wobei mit einer abtreibenden Welle des Summierungsgetriebes (12) eine eintreibende Welle eines Getriebes (2) angetrieben wird, das eine abtreibende Welle (14) aufweist,
wobei die abtreibende Welle (14) mit einer Welle der anzutreibenden Last verbunden ist,
wobei einem Energiespeicher (10, 503) Leistung vom Summierungsgetriebe (12) zuführbar ist oder Leistung vom Energiespeicher (10, 503) ans Summierungsgetriebe (12) abführbar ist,
**dadurch gekennzeichnet, dass**
- das Summierungsgetriebe (12) ein Gehäuseteil mit Zentriermittel aufweist, wobei das Zentriermittel als Zentrierflansch fungierender Adapterflansch (5) ausgeführt ist, mit welchem Gehäuseteile der Elektromotoren (7) verbunden sind,
- zwischen Zentriermittel und Gehäuse des Getriebes (2) Beabstandungsmittel, wie Abstandshalter (4), angeordnet sind, welche eine thermische Trennung zwischen Getriebe (2) und Summierungsgetriebe (12) bewirken,
- die abtreibende Welle des Summierungsgetriebes (12) in einem Lagertopf (3, 45) gelagert ist, der an einem Zentrierbund des Zentriermittels mit diesem verbunden ist, und welcher in eine Aufnahmebohrung des Gehäuses des Getriebes (2) eingeführt ist,
- und die Beabstandungsmittel im axialen Bereich zwischen der Aufnahmebohrung und dem Adapterflansch (5), insbesondere dem Zentrierbund des Adapterflansches, angeordnet sind auf größerem Radialabstand als der Lagertopf (3, 45).

2. Antrieb nach Anspruch 1,
wobei das Summierungsgetriebe (12) ein zentrales Verzahnteil (54), insbesondere Sonnenrad, aufweist, mit welchem weitere Verzahnteile (55), insbesondere Ritzel, im Eingriff stehen,
wobei ein erstes weiteres Verzahnteil von einem der Elektromotoren (7) angetrieben ist und mit der Rotorwelle des Elektromotors (7) drehfest verbunden ist,
wobei ein zweites weiteres Verzahnteil
- mit einer Welle eines Schwungradspeichers oder
- mit einer Welle einer Elektromaschine, die bei generatorischem Betrieb über eine elektrische Wandlereinheit Energie in einen Energiespeicher einspeist oder bei motorischem Betrieb aus dem Energiespeicher gespeist wird,
drehfest verbunden ist.

3. Antrieb nach Anspruch 1 oder 2,
**dadurch gekennzeichnet, dass**
der Energiespeicher (503) einen Akkumulator, eine Batterie und/oder einen Kondensator, insbesondere Doppelschichtkondensator und/oder Ultracap-Kondensator, aufweist.

4. Antrieb nach einem der Ansprüche 2 oder 3,
**dadurch gekennzeichnet, dass**
die elektrische Wandlereinheit ein rückspeisefähiger Umrichter oder ein Matrixumrichter ist.

5. Antrieb nach einem der Ansprüche 2 bis 4,
**dadurch gekennzeichnet, dass**
die weiteren Verzahnteile (55) einstückig an der jeweiligen Welle ausgebildet sind, insbesondere also an der Welle des Schwungradspeichers, an der Welle des Elektromotors oder an der Welle der Elektromaschine.

6. Antrieb nach einem der Ansprüche 2 bis 5,
**dadurch gekennzeichnet, dass**
die Elektromaschine baugleich zu den Elektromotoren (7) ausgeführt ist.

7. Antrieb nach einem der Ansprüche 2 bis 6,
**dadurch gekennzeichnet, dass**
die Elektromotoren (7) mittels eines Kühlmediums entwärmbar sind, insbesondere hierzu die Elektromotoren (7) Kühlkanäle aufweisen, die im Adapterflansch (5) zusammengeführt werden und in einen gemeinsamen Anschluss, insbesondere Auslassvorrichtung, münden.

8. Antrieb nach einem der Ansprüche 2, 5, 6 oder 7,
**dadurch gekennzeichnet, dass**
auf der Welle des Schwungradspeichers eine als Schwungrad ausgebildete Masse (502) angeordnet ist.

9. Antrieb nach einem der Ansprüche 2 bis 8,
**dadurch gekennzeichnet, dass**
die Wandlereinheit eine Steuerung (502) aufweist, welche den Energiefluss zwischen Summierungsgetriebe (12) und Energiespeicher (503) steuert.

10. Antrieb nach einem der Ansprüche 2 bis 9,
**dadurch gekennzeichnet, dass**
das zentrale Verzahnteil (54) auf einer abtreibenden Welle des Summierungsgetriebes (12) angeordnet ist, welche als eintreibende Welle des Getriebes (2) fungiert.

## Claims

1. A drive for driving a load, wherein the drive has a gear unit (2), a summation gearbox (12) and electric motors (7),
wherein power from the electric motors (7) is supplied to the summation gearbox (12),
wherein an input shaft of a gear unit (2) which has an output shaft (14) is driven with an output shaft of the summation gearbox (12),
wherein the output shaft (14) is connected to a shaft of the load which is to be driven,
wherein power from the summation gearbox (12) can be supplied to an energy store (10, 503) or power from the energy store (10, 503) can be transmitted to the summation gearbox (12),
**characterised in that**
- the summation gearbox (12) has a housing part with centring means, the centring means being embodied as an adapter flange (5) acting a centring flange, to which housing parts of the electric motors (7) are connected,
- spacing means, such as spacers (4), are arranged between the centring means and housing of the gear unit (2), which bring about thermal separation between the gear unit (2) and summation gearbox (12),
- the output shaft of the summation gearbox (12) is mounted in a bearing cup (3, 45), which at a centring collar of the centring means is connected thereto, and which is introduced into a receiving bore of the housing of the gear unit (2),
- and the spacing means are arranged in the axial region between the receiving bore and the adapter flange (5), in particular the centring collar of the adapter flange, at a greater radial distance than the bearing cup (3, 45).

2. A drive according to Claim 1,
wherein the summation gearbox (12) has a central toothed part (54), in particular sun wheel, with which further toothed parts (55), in particular pinions, are engaged,
wherein a first further toothed part is driven by one of the electric motors (7) and is connected in rotation-resistant manner to the rotor shaft of the electric motor (7),
wherein a second further toothed part is connected in rotation-resistant manner
- to a shaft of a flywheel storage system or
- to a shaft of an electric machine which when operating as a generator feeds energy into an energy store by way of an electrical converter unit, or when operating as a motor is fed from the energy store.

3. A drive according to Claim 1 or 2,
**characterised in that**
the energy store (503) has a rechargeable battery, a battery and/or a capacitor, in particular double-layer capacitor and/or ultracap capacitor.

4. A drive according to one of Claims 2 or 3,
**characterised in that**
the electrical converter unit is a regenerative converter or a matrix converter.

5. A drive according to one of Claims 2 to 4,
**characterised in that**
the further toothed parts (55) are formed in one piece on the respective shaft, in particular therefore on the shaft of the flywheel storage system, on the shaft of the electric motor or on the shaft of the electric machine.

6. A drive according to one of Claims 2 to 5,
**characterised in that**
the electric machine is of identical construction to the electric motors (7).

7. A drive according to one of Claims 2 to 6,
**characterised in that**
heat can be dissipated from the electric motors (7) by means of a cooling medium, in particular to this end the electric motors (7) have cooling ducts which are brought together in the adapter flange (5) and open into a common connection, in particular outlet device.

8. A drive according to one of Claims 2, 5, 6 or 7,
**characterised in that**
a mass (502) formed as a flywheel is arranged on the shaft of the flywheel storage system.

9. A drive according to one of Claims 2 to 8,
**characterised in that**
the converter unit has a control means (502) which controls the flow of energy between the summation gearbox (12) and energy store (503).

10. A drive according to one of Claims 2 to 9,
**characterised in that**
the central toothed part (54) is arranged on an output shaft of the summation gearbox (12) which acts as the input shaft of the gear unit (2).

## Revendications

1. Entraînement destiné à entraîner une charge, l'entraînement comprenant un engrenage (2), un engrenage sommateur (12) et des moteurs électriques (7),
dans lequel une puissance des moteurs électriques (7) est amenée à l'engrenage sommateur (12),
dans lequel un arbre de sortie de l'engrenage sommateur (12) entraîne un arbre d'entrée d'un engrenage (2) qui présente un arbre de sortie (14),
dans lequel l'arbre de sortie (14) est relié à un arbre de la charge à entraîner,
dans lequel une puissance provenant de l'engrenage sommateur (12) peut être amenée à un accumulateur d'énergie (10, 503) ou une puissance provenant de l'accumulateur d'énergie (10, 503) peut être dissipée sur l'engrenage sommateur (12),
**caractérisé en ce que**
- l'engrenage sommateur (12) présente une partie de carter avec un moyen de centrage, le moyen de centrage étant réalisé sous la forme d'une bride d'adaptation (5) agissant comme bride de centrage, à laquelle des parties de carter des moteurs électriques (7) sont reliées,
- des moyens d'espacement, tels que des entretoises (4), sont disposés entre le moyen de centrage et le carter de l'engrenage (2), lesquels produisent une séparation thermique entre l'engrenage (2) et l'engrenage sommateur (12),
- l'arbre de sortie de l'engrenage sommateur (12) est monté dans un logement de palier (3, 45) qui est relié au moyen de centrage à un collet de centrage de ce dernier et qui est introduit dans un alésage de réception du carter de l'engrenage (2),
- et les moyens d'espacement sont disposés dans la zone axiale entre l'alésage de réception et la bride d'adaptation (5), en particulier le collet de centrage de la bride d'adaptation, à une plus grande distance radiale que le logement de palier (3, 45).

2. Entraînement selon la revendication 1,
dans lequel l'engrenage sommateur (12) présente une partie dentée centrale (54), en particulier une roue solaire, avec laquelle d'autres parties dentées (55), en particulier des pignons, sont en prise,
dans lequel une première autre partie dentée est entraînée par l'un des moteurs électriques (7) et est reliée de manière solidaire en rotation à l'arbre de rotor du moteur électrique (7),
dans lequel une deuxième autre partie dentée est reliée de manière solidaire en rotation
- à un arbre d'un accumulateur à volant d'inertie ou
- à un arbre d'une machine électrique qui, en fonctionnement générateur, alimente en énergie un accumulateur d'énergie par l'intermédiaire d'une unité de conversion électrique ou, en fonctionnement moteur, est alimentée à partir de l'accumulateur d'énergie.

3. Entraînement selon la revendication 1 ou 2,
**caractérisé en ce que**
l'accumulateur d'énergie (503) est un accumulateur, une batterie et/ou un condensateur, en particulier un condensateur à double couche et/ou un supercondensateur.

4. Entraînement selon l'une des revendications 2 ou 3,
**caractérisé en ce que**
l'unité de conversion électrique est un variateur régénératif ou un variateur matriciel.

5. Entraînement selon l'une des revendications 2 à 4,
**caractérisé en ce que**
les autres parties dentées (55) sont formées d'une seule pièce sur l'arbre respectif, en particulier donc sur l'arbre de l'accumulateur à volant d'inertie, sur l'arbre du moteur électrique ou sur l'arbre de la machine électrique.

6. Entraînement selon l'une des revendications 2 à 5,
**caractérisé en ce que**
la machine électrique est réalisée de manière identique aux moteurs électriques (7).

7. Entraînement selon l'une des revendications 2 à 6,
**caractérisé en ce que**
les moteurs électriques (7) peuvent être refroidis au moyen d'un fluide de refroidissement, en particulier les moteurs électriques (7) présentent à cet effet des canaux de refroidissement qui sont réunis dans la bride d'adaptation (5) et débouchent dans un raccord commun, en particulier un dispositif de sortie.

8. Entraînement selon l'une des revendications 2, 5, 6 ou 7,
**caractérisé en ce**
**qu'**une masse (502) réalisée sous la forme d'un volant d'inertie est disposée sur l'arbre de l'accumulateur à volant d'inertie.

9. Entraînement selon l'une des revendications 2 à 8,
**caractérisé en ce que**
l'unité de conversion présente une commande (502) qui commande le flux d'énergie entre l'engrenage sommateur (12) et l'accumulateur d'énergie (503).

10. Entraînement selon l'une des revendications 2 à 9,
**caractérisé en ce que**
la partie dentée centrale (54) est disposée sur un arbre de sortie de l'engrenage sommateur (12), qui agit comme arbre d'entrée de l'engrenage (2).
